# EUROPEAN PATENT SPECIFICATION

(11) **EP 1 119 237 B1**
(45) Date of publication and mention of the grant of the patent: **27.04.2005**
(21) Application number: 00946559.2
(22) Date of filing: 18.07.2000
(51) Int. Cl.: A01K 13/00, A01K 1/00, A01K 1/12, A01K 1/02

(54) **A METHOD OF COOLING ANIMALS**
VERFAHREN ZUM KÜHLEN VON TIEREN
PROCEDE DE REFROIDISSEMENT POUR ANIMAUX

(30) Priority: 11.08.1999 NL 1012809
(43) Date of publication of application: 01.08.2001
(73) Proprietor: Lely Enterprises AG, 6300 ZUG (CH)
(72) Inventor: VERBURG, Carlo, NL-2641 NG Pijnacker (NL); VAN DER LELY, Alexander, NL-3065 NA Rotterdam (NL); FRANSEN, Renatus, Ignatius, Josephus, NL-3135 ZD Vlaardingen (NL); VAN DEN BERG, Karel, NL-2971 BR Bleskensgraaf (NL)
(74) Representative: Corten, Maurice Jean F.M.
(86) International application number: PCT/NL2000/000504
(87) International publication number: WO 2001/010197

(56) References cited:
- EP-A- 0 728 413
- WO-A-97/43897
- WO-A-98/04121
- BE-A- 439 919
- DE-C- 314 419
- DE-U- 1 926 019
- GB-A- 2 313 032
- US-A- 4 345 548
- US-A- 4 693 852

## Description

The invention relates to a method of cooling animals according to the preamble of claim 1.

Such a method is known from US-A-4,693,852.

Document US-A-4,693,852 describes a cooling apparatus for cooling animals. The apparatus creates a cool microclimate at the skin and fur of an animal by directing a flow of evaporatively cooled air over the animal and by wetting the coat of the animal. Therefore the apparatus comprises a ventilator and nozzles for injecting water droplets into the air flowing through said apparatus.

The known method has the disadvantage that the water is distributed throughout the stable, so that relatively much water is required. A further disadvantage of the known method is that the airflow is only used for transporting the water droplets.

The invention aims at a method in which the above-mentioned drawbacks are obviated or at least minimized. In accordance with the invention, this is achieved in that after applying the liquid air is blown over the liquid. In this manner the evaporation of the liquid is optimally utilized, so that an optimal cooling of the animal is obtained. According to a further inventive feature, there is obtained an even better cooling if the liquid is atomized to a fine spray. According to another inventive feature, it is also possible to rub the liquid between the hairs and/or on the skin of the animal. According to again another inventive feature, it is further possible to apply the liquid between the hairs and/or on the skin of the animal by rubbing and/or brushing. In order to avoid the use of too much liquid, according to an inventive feature, a previously fixed maximum amount of liquid per animal is applied to the animal.

After wetting the animal it is important to avoid the formation of unevenly large droplets, because such droplets evaporate less readily. Furthermore, formation of droplets may result in the liquid reaching undesired places, such as e.g. the teats of an animal to be milked. Therefore, according to an inventive feature, during wetting the animal it is checked whether droplets are formed on the animal's skin or fall from the animal. According to an inventive feature, wetting of the animal is stopped if formation of droplets is ascertained during wetting. Formation of droplets can be recorded e.g. optically by means of e.g. picture recognition. According to another inventive feature, the back of the animal is cooled. In order to avoid that during wetting certain other parts of the animal come unintentionally into contact with the liquid, according to an inventive feature, during wetting and/or cooling the animal said other parts of the animal are shielded. It is desirable e.g. to shield the head and the udder and/or the teats of the animal. According to a further inventive feature, the udder or the teats of the animal and/or the animal's head are shielded.

For the purpose of following carefully the cooling process of the animal, according to an inventive feature, during cooling the animal the temperature, in particular the temperature of the skin and/or the body and/or the ambient temperature in the vicinity of the part of the animal to be cooled, is determined. According to another inventive feature, cooling is stopped when a previously set temperature is reached. In order to avoid that the animal is exposed to stress during cooling, according to an inventive feature, the animal's behaviour is observed during cooling, and cooling is stopped if the animal's behaviour changes. According to an aspect of the invention, the animal's behaviour can be deduced from deviations from the previously set number of movements of the animal per unit of time. In practice it has been found that the animals experience cooling as a pleasant sensation during and/or prior to milking. According to the invention, it has further been found that the animals go to the milking stall spontaneously if they are cooled there.

The invention also relates to a method in which stress, such as e.g. heat stress, of the animals to be cooled is ascertained, whereupon it is decided whether or not to cool the animal as described in the foregoing. The invention also relates to a method in which heat stress is ascertained on the basis of an infrared picture of the animal. The invention also relates to a method in which the period of time during which the animal is cooled and/or the intensity of cooling depend(s) on a heat stress factor which is i.a. derived from the infrared picture.

The invention further relates to a method in which stress, such as heat stress, of the animal is ascertained on the basis of the position of the animal's ears. According to the method, stress, such as heat stress, of the animal is ascertained on the basis of the wetness of the animal's coat. According to a further aspect of the method, stress, such as heat stress, of the animal is ascertained on the basis of the activity of the animal. According to another feature of the method, stress, such as heat stress, of the animal is ascertained on the basis of the expression of the animal's eyes. According to again another aspect of the method, stress, such as heat stress, of the animal is ascertained on the basis of the animal's breath. According to another aspect of the method, stress, such as heat stress, of the animal is ascertained on the basis of the tension of the muscles, in particular of the back muscles, of the animal. According to again another aspect of the method, stress, such as heat stress, of the animal is ascertained on the basis of the fact that the animal is walking with its tongue out.

The invention also relates to an implement as claimed in claim 27, characterized in that the implement is provided with air displacing means for directing an air flow over the wetted part after the applying of the liquid. According to a further inventive feature, the wetting means comprise a liquid atomization device. By means of the liquid atomization device it is possible to apply a fine spray of e.g. water to the animal. The wetting means may further comprise a brushing device. According to again another inventive feature, the air displacing means comprise setting means with the aid of which the amount of air to be displaced and/or the velocity of the air to be displaced are/is set. In combination with temperature measurement it is thus possible to control cooling of the animal very accurately. According to a further inventive feature, the implement is arranged in a milking stall and/or a foremilking stall and/or a cleaning box for cleaning certain parts, such as the teats, of the animal, and/or in a post-treatment box. According to again another inventive feature, there is disposed a milking robot in the milking stall, by means of which teat cups are automatically connected to the teats of the animal to be milked.

In accordance with a further aspect of the invention, the implement comprises means with the aid of which stress, in particular heat stress, of an animal is ascertained. According to another inventive feature, the means comprise a camera, such as e.g. an infrared camera. According to again another inventive feature, the means comprise a hydrometer. According to a further inventive feature, the means comprise an odour meter.

The invention will now be explained in further detail with reference to the accompanying drawings, in which:
Figure 1 is a side view of a first embodiment of the invention, and
Figure 2 is a second embodiment of an implement according to the invention.

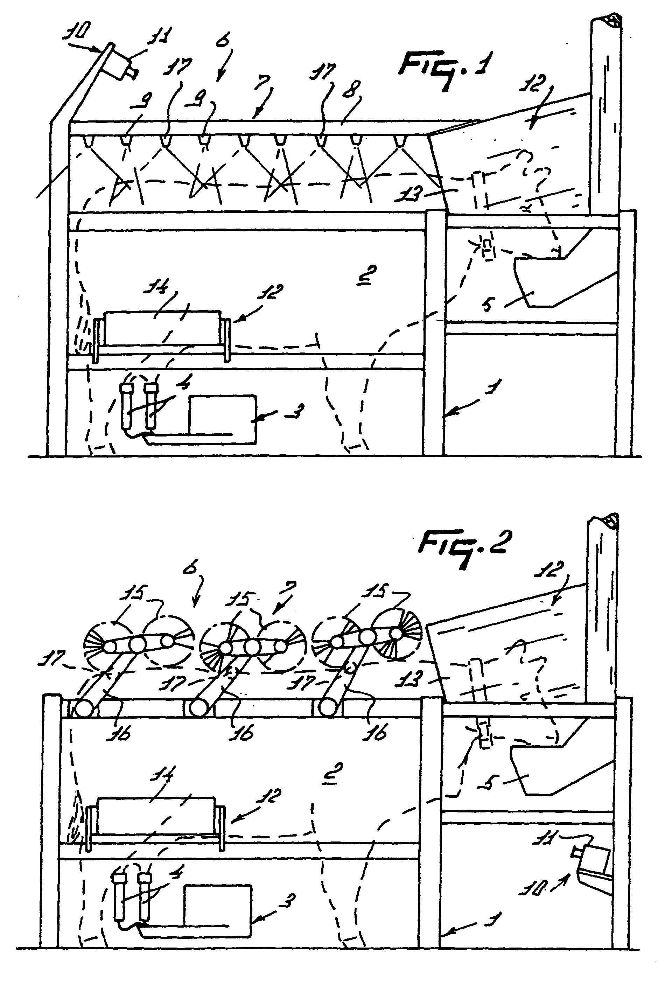

Figure 1 is a side view of a milk box 1 with a cow 2 present therein. The milk box 1 comprises a milking robot 3 with teat cups 4 which are connected automatically to the teats of the cow 2 by means of the milking robot 3. Near the front side of the milk box 1 there is further disposed a feeding trough 5 to which concentrate can be supplied in metered portions. The milk box 1 is further provided with regulating means 6 with the aid of which at least one previously determined climate parameter is set artificially in the milk box 1. The regulating means 6 comprise wetting means 7 with the aid of which at least the back of the cow 2 is wetted. The wetting means 7 comprise a sprayer beam 8 with nozzles 9, by means of which a liquid can be atomized to a fine spray. After the liquid reduced to a fine spray has been applied to the back of the cow 2, air is directed over the wetted surface by means of the sprayer beam 8 and the nozzles 9. In this manner the back of the cow 2 is cooled. During wetting the cow 2 it is checked with the aid of the detection means 10 whether or not formation of droplets takes place. To that end the detection means 10 comprise a camera 11. In order to prevent certain parts of the cow 2 from coming into contact with the liquid, the milk box 1 is further provided with shielding means 12. In the present embodiment the shielding means 12 comprise a transparent shielding cap 13 which covers the head of the cow 2 during wetting. The shielding means 12 further comprise a second shielding cap 14 by means of which the udder of the cow 2 can be shielded. The second shielding cap 14 is pivotably fitted to the milk box 1.

Figure 2 shows a second embodiment of the invention, in which parts corresponding to those of the first embodiment are indicated by the same reference numerals. In the second embodiment of the invention, the wetting means 7 comprise motor-drivable brushes 15 which are provided with (non-shown) liquid supply means with the aid of which liquid can be supplied to the brushes 15 during brushing. Thus, the liquid is rubbed in the hair of the cow 2 by means of the brushes 15. The motor-drivable brushes 15 are disposed on a pivotable arm 16 which is connected to the milk box 1. The pivotable arm 16 is further provided with air displacing means 17 with the aid of which air is directed over the wetted surface of the cow 2 after or during brushing.

## Claims

1. A method of cooling animals, such as cows, whereby a liquid is applied between the hairs and/or on the skin of the animal, and wherein air is blown over the liquid, **characterized in that,** after applying the liquid air is blown over the liquid.

2. A method as claimed in claim 1, **characterized in that** the liquid is atomized to a fine spray.

3. A method as claimed in claim 1 or 2, **characterized in that** the liquid is rubbed between the hairs and/or on the skin of the animal.

4. A method as claimed in claim 3, **characterized in that** the liquid is applied between the hairs and/or on the skin of the animal by rubbing and/or brushing.

5. A method as claimed in any one of the preceding claims, **characterized in that** for wetting an animal a previously fixed maximum amount of liquid is used per animal.

6. A method as claimed in any one of the preceding claims, **characterized in that** during wetting the animal it is checked whether droplets are formed on the animal's skin or fall from the animal.

7. A method as claimed in claim 6, **characterized in that** wetting of the animal is stopped if formation of droplets is ascertained.

8. A method as claimed in any one of the preceding claims, **characterized in that** the back of the animal is cooled.

9. A method as claimed in any one of the preceding claims, **characterized in that** during wetting and/or cooling the animal certain parts of the animal are shielded.

10. A method as claimed in claim 9, **characterized in that** the udder or the teats of the animal are shielded.

11. A method as claimed in claim 9 or 10, **characterized in that** the animal's head is shielded.

12. A method as claimed in any one of the preceding claims, **characterized in that** during cooling the animal the temperature, in particular the temperature of the skin and/or the body and/or the ambient temperature in the vicinity of the part of the animal to be cooled, is determined.

13. A method as claimed in claim 12, **characterized in that** cooling of the animal is stopped when a previously set temperature is reached.

14. A method as claimed in any one of the preceding claims, **characterized in that** the animal's behaviour is observed during cooling, and cooling is stopped if the animal's behaviour changes.

15. A method as claimed in claim 14, **characterized in that** the animal's behaviour is deduced from deviations from the previously set number of movements of the animal per unit of time.

16. A method as claimed in any one of the preceding claims, **characterized in that** cooling of the animal is carried out just before and/or during milking the animal.

17. A method as claimed in any one of the preceding claims, **characterized in that** stress, such as e.g. heat stress, of the animals to be cooled is ascertained, whereupon it is decided whether or not to cool the animal as described in any one of claims 1 to 16.

18. A method as claimed in claim 17, **characterized in that** heat stress is ascertained on the basis of an infrared picture of the animal.

19. A method as claimed in claim 18, **characterized in that** the period of time during which the animal is cooled and/or the intensity of cooling depend(s) on a heat stress factor which is i.a. derived from the infrared picture.

20. A method as claimed in any one of claims 17 to 19, **characterized in that** stress, such as heat stress, of the animal is ascertained on the basis of the position of the animal's ears.

21. A method as claimed in any one of claims 17 to 20, **characterized in that** stress, such as heat stress, of the animal is ascertained on the basis of the wetness of the animal's coat.

22. A method as claimed in any one of claims 17 to 21, **characterized in that** stress, such as heat stress, of the animal is ascertained on the basis of the activity of the animal.

23. A method as claimed in any one of claims 17 to 22, **characterized in that** stress, such as heat stress, of the animal is ascertained on the basis of the expression of the animal's eyes.

24. A method as claimed in any one of claims 17 to 23, **characterized in that** stress, such as heat stress, of the animal is ascertained on the basis of the animal's breath.

25. A method as claimed in any one of claims 17 to 24, **characterized in that** stress, such as heat stress, of the animal is ascertained on the basis of the tension of the muscles, in particular of the back muscles, of the animal.

26. A method as claimed in any one of claims 17 to 25, **characterized in that** stress, such as heat stress, of the animal is ascertained on the basis of the fact that the animal is walking with its tongue out.

## Patentansprüche

1. Verfahren zum Kühlen von Tieren, wie z. B. Kühen, wobei eine Flüssigkeit zwischen die Haare und/oder auf die Haut des Tieres befördert wird, und wobei Luft über die Flüssigkeit geblasen wird,
**dadurch gekennzeichnet, daß** nach dem Aufbringen der Flüssigkeit Luft über die Flüssigkeit geblasen wird.

2. Verfahren nach Anspruch 1,
**dadurch gekennzeichnet, daß** die Flüssigkeit zu einem feinen Sprühnebel zerstäubt wird.

3. Verfahren nach Anspruch 1 oder 2,
**dadurch gekennzeichnet, daß** die Flüssigkeit zwischen die Haare und/oder auf die Haut des Tieres gerieben wird.

4. Verfahren nach Anspruch 3,
**dadurch gekennzeichnet, daß** die Flüssigkeit durch Reiben und/oder Bürsten zwischen die Haare und/oder auf die Haut des Tieres befördert wird.

5. Verfahren nach einem der vorhergehenden Ansprüche,
**dadurch gekennzeichnet, daß** zum Befeuchten eines Tieres eine zuvor festgelegte, maximale Flüssigkeitsmenge pro Tier verwendet wird.

6. Verfahren nach einem der vorhergehenden Ansprüche,
**dadurch gekennzeichnet, daß** während des Befeuchtens des Tieres geprüft wird, ob sich auf der Haut des Tieres Tröpfchen bilden oder von dem Tier herabfallen.

7. Verfahren nach Anspruch 6,
**dadurch gekennzeichnet, daß** das Befeuchten des Tieres beendet wird, wenn die Bildung von Tröpfchen festgestellt wird.

8. Verfahren nach einem der vorhergehenden Ansprüche,
**dadurch gekennzeichnet, daß** der Rücken des Tieres gekühlt wird.

9. Verfahren nach einem der vorhergehenden Ansprüche,
**dadurch gekennzeichnet, daß** während des Befeuchtens und/oder Kühlens des Tieres bestimmte Teile des Tieres abgeschirmt sind.

10. Verfahren nach Anspruch 9,
**dadurch gekennzeichnet, daß** das Euter oder die Zitzen des Tieres abgeschirmt sind.

11. Verfahren nach Anspruch 9 oder 10,
**dadurch gekennzeichnet, daß** der Kopf des Tieres abgeschirmt ist.

12. Verfahren nach einem der vorhergehenden Ansprüche,
**dadurch gekennzeichnet, daß** während des Kühlens des Tieres die Temperatur, insbesondere die Temperatur der Haut und/oder des Körpers und/oder die Umgebungstemperatur in der Nähe des zu kühlenden Teiles des Tieres ermittelt wird.

13. Verfahren nach Anspruch 12,
**dadurch gekennzeichnet, daß** das Kühlen des Tieres beendet wird, wenn eine voreingestellte Temperatur erreicht ist.

14. Verfahren nach einem der vorhergehenden Ansprüche,
**dadurch gekennzeichnet, daß** während des Kühlens das Verhalten des Tieres beobachtet und das Kühlen beendet wird, wenn sich das Verhalten des Tieres ändert.

15. Verfahren nach Anspruch 14,
**dadurch gekennzeichnet, daß** das Verhalten des Tieres von Abweichungen von der voreingestellten Anzahl von Bewegungen des Tieres pro Zeiteinheit abgeleitet wird.

16. Verfahren nach einem der vorhergehenden Ansprüche,
**dadurch gekennzeichnet, daß** das Kühlen des Tieres kurz vor und/oder während des Melkens des Tieres erfolgt.

17. Verfahren nach einem der vorhergehenden Ansprüche,
**dadurch gekennzeichnet, daß** die Belastung, wie z. B. die Hitzebelastung, der zu kühlenden Tiere ermittelt wird, wonach entschieden wird, ob das Tier gekühlt wird oder nicht, wie es in einem der Ansprüche 1 bis 16 beschrieben ist.

18. Verfahren nach Anspruch 17,
**dadurch gekennzeichnet, daß** die Hitzebelastung auf der Basis eines Infrarotbildes des Tieres ermittelt wird.

19. Verfahren nach Anspruch 18,
**dadurch gekennzeichnet, daß** der Zeitraum, während dessen das Tier gekühlt wird, und/oder die Intensität des Kühlens von einem Hitzebelastungsfaktor abhängt, der u. a. von dem Infrarotbild abgeleitet wird.

20. Verfahren nach einem der Ansprüche 17 bis 19,
**dadurch gekennzeichnet, daß** die Belastung, wie z. B. die Hitzebelastung, des Tieres auf der Basis der Position der Ohren des Tieres ermittelt wird.

21. Verfahren nach einem der Ansprüche 17 bis 20,
**dadurch gekennzeichnet, daß** die Belastung, wie z. B. die Hitzebelastung, des Tieres auf der Basis der Feuchtigkeit des Felles des Tieres ermittelt wird.

22. Verfahren nach einem der Ansprüche 17 bis 21,
**dadurch gekennzeichnet, daß** die Belastung, wie z. B. die Hitzebelastung, des Tieres auf der Basis der Aktivität des Tieres ermittelt wird.

23. Verfahren nach einem der Ansprüche 17 bis 22,
**dadurch gekennzeichnet, daß** die Belastung, wie z. B. die Hitzebelastung, des Tieres auf der Basis des Ausdruckes der Augen des Tieres ermittelt wird.

24. Verfahren nach einem der Ansprüche 17 bis 23,
**dadurch gekennzeichnet, daß** die Belastung, wie z. B. die Hitzebelastung, des Tieres auf der Basis des Atems des Tieres ermittelt wird.

25. Verfahren nach einem der Ansprüche 17 bis 24,
**dadurch gekennzeichnet, daß** die Belastung, wie z. B. die Hitzebelastung, des Tieres auf der Basis der Spannung der Muskeln, insbesondere der Rückenmuskeln, des Tieres ermittelt wird.

26. Verfahren nach einem der Ansprüche 17 bis 25,
**dadurch gekennzeichnet, daß** die Belastung, wie z. B. die Hitzebelastung, des Tieres auf der Basis der Tatsache ermittelt wird, daß das Tier mit heraushängender Zunge umherläuft.

## Revendications

1. Procédé de refroidissement pour des animaux, tels que des vaches, par lequel un liquide est appliqué entre les poils et/ou sur la peau de l'animal, et dans lequel de l'air est soufflé sur le liquide, **caractérisé en ce que**, après l'application du liquide, de l'air est soufflé sur le liquide.

2. Procédé selon la revendication 1, **caractérisé en ce que** le liquide est pulvérisé sous la forme d'une pulvérisation fine.

3. Procédé selon la revendication 1 ou 2, **caractérisé en ce que** le liquide est frotté entre les poils et/ou sur la peau de l'animal.

4. Procédé selon la revendication 3, **caractérisé en ce que** le liquide est appliqué entre les poils et/ou sur la peau de l'animal par frottement et/ou brossage.

5. Procédé selon l'une quelconque des revendications précédentes, **caractérisé en ce que**, pour mouiller un animal, on utilise une quantité maximale de liquide déterminée au préalable pour chaque animal.

6. Procédé selon l'une quelconque des revendications précédentes, **caractérisé en ce que**, pendant le mouillage de l'animal, on vérifie si des gouttelettes sont formées sur la peau de l'animal, ou si elles tombent de l'animal.

7. Procédé selon la revendication 6, **caractérisé en ce que** le mouillage de l'animal est interrompu si on constate la formation de gouttelettes.

8. Procédé selon l'une quelconque des revendications précédentes, **caractérisé en ce que** le dos de l'animal est refroidi.

9. Procédé selon l'une quelconque des revendications précédentes, **caractérisé en ce que**, pendant le mouillage et/ou le refroidissement de l'animal, certaines parties de l'animal sont protégées.

10. Procédé selon la revendication 9, **caractérisé en ce que** le pis ou les trayons de l'animal sont protégés.

11. Procédé selon la revendication 9 ou 10, **caractérisé en ce que** la tête de l'animal est protégée.

12. Procédé selon l'une quelconque des revendications précédentes, **caractérisé en ce que**, pendant le refroidissement de l'animal, on détermine la température, en particulier la température de la peau et/ou du corps et/ou la température ambiante à proximité de la partie de l'animal qui doit être refroidie.

13. Procédé selon la revendication 12, **caractérisé en ce que** le refroidissement de l'animal est interrompu lorsqu'une température déterminée au préalable est atteinte.

14. Procédé selon l'une quelconque des revendications précédentes, **caractérisé en ce qu'**on observe le comportement de l'animal pendant le refroidissement, et **en ce que** le refroidissement est interrompu si le comportement de l'animal change.

15. Procédé selon la revendication 14, **caractérisé en ce que** le comportement de l'animal est déduit des écarts observés par rapport au nombre déterminé au préalable de mouvements de l'animal par unité de temps.

16. Procédé selon l'une quelconque des revendications précédentes, **caractérisé en ce que** le refroidissement de l'animal est réalisé juste avant et/ou pendant la traite de l'animal.

17. Procédé selon l'une quelconque des revendications précédentes, **caractérisé en ce que** des contraintes, telles que les contraintes thermiques, par exemple, des animaux devant être refroidis sont déterminées, après quoi on décide si l'animal doit être refroidi ou non tel que cela a été décrit dans l'une quelconque des revendications 1 à 16.

18. Procédé selon la revendication 17, **caractérisé en ce que** les contraintes thermiques sont déterminées en se basant sur une image infrarouge de l'animal.

19. Procédé selon la revendication 18, **caractérisé en ce que** la période de temps pendant laquelle l'animal est refroidi et/ou l'intensité du refroidissement dépend (ent) d'un facteur de contrainte thermique qui est calculé par avance à partir de l'image infrarouge.

20. Procédé selon l'une quelconque des revendications 17 à 19, **caractérisé en ce que** des contraintes, telles que les contraintes thermiques, de l'animal sont déterminées en se basant sur la position des oreilles de l'animal.

21. Procédé selon l'une quelconque des revendications 17 à 20, **caractérisé en ce que** des contraintes, telles que les contraintes thermiques, de l'animal sont déterminées en se basant sur l'humidité de la robe de l'animal.

22. Procédé selon l'une quelconque des revendications 17 à 21, **caractérisé en ce que** des contraintes, telles que les contraintes thermiques, de l'animal sont déterminées en se basant sur l'activité de l'animal.

23. Procédé selon l'une quelconque des revendications 17 à 22, **caractérisé en ce que** des contraintes, telles que les contraintes thermiques, de l'animal sont déterminées en se basant sur l'expression des yeux de l'animal.

24. Procédé selon l'une quelconque des revendications 17 à 23, **caractérisé en ce que** des contraintes, telles que les contraintes thermiques, de l'animal sont déterminées en se basant sur la respiration de l'animal.

25. Procédé selon l'une quelconque des revendications 17 à 24, **caractérisé en ce que** des contraintes, telles que les contraintes thermiques, de l'animal sont déterminées en se basant sur la tension des muscles, en particulier des muscles du dos, de l'animal.

26. Procédé selon l'une quelconque des revendications 17 à 25, **caractérisé en ce que** des contraintes, telles que les contraintes thermiques, de l'animal sont déterminées en se basant sur le fait que l'animal marche avec la langue dehors.
